# EUROPEAN PATENT SPECIFICATION

(11) **EP 2 983 823 B1**
(45) Date of publication and mention of the grant of the patent: **30.12.2020**
(21) Application number: 14719670.3
(22) Date of filing: 11.04.2014
(51) Int. Cl.: B01L 3/00, G01N 35/00, G01N 35/10

(54) **MANIFOLD DRIVER**
VERTEILERANTRIEB
PILOTE DE COLLECTEUR

(30) Priority: 12.04.2013 EP 13163554
(43) Date of publication of application: 17.02.2016
(73) Proprietor: Biocartis NV, 2800 Mechelen (BE)
(72) Inventor: KROON, Gerard, NL-5656 AE Eindhoven (NL); DE GIER, Ronald, NL-5656 AE Eindhoven (NL)
(74) Representative: Grimm, Siegfried
(86) International application number: PCT/EP2014/057412
(87) International publication number: WO 2014/167109

(56) References cited:
- WO-A1-2009/087857
- US-A- 4 689 204
- US-A1- 2011 059 834
- US-A1- 2012 183 956
- US-B1- 6 656 428

## Description

The present invention relates to a fluid control and processing system comprising a cartridge and an instrument designed for operating the cartridge.

Analysis of environmental or clinical fluids usually involves multiple step processes, from chemical to thermal or acoustical treatments of the sample. Such protocols are sometimes performed in disposable cartridges that involve microfluidic processes and that comprise for these purposes different inner parts such as fluid containers, reaction chambers, fluid analyzers, microchannels, etc... The movement of the fluids, reagents and liquefied samples, between the different inner parts requires fluid pumps and/or valves. These pumps and/or valves are either enclosed in instruments that are designed for receiving and operating said cartridges or are embedded in the cartridges. The pumps and or valves embedded in an instrument that controls the cartridges present several drawbacks, such as risks of fluid cross contaminations, leakages and wear.

A pump or valve embedded in a disposable cartridge, as described in the document US8048386, usually comprises a plunger and a cylinder for delivering fluids to a rotary port that can be put in fluid communication with one or more channels, each connected to a specific inner part of the cartridge. The interface between such a cartridge and an instrument that operate it is complex and present several drawbacks with respect to accuracy and reliability.

The existing cartridges and instruments do not offer satisfying solutions with respect to the control of the pumps and/or valves and there is a need for cartridges and instruments that offer a simple, accurate and reliable fluid control.

In US6656428 B1, an analytical instrument utilizes an assay cartridge which has a sample receiving port and a rotatable carousel containing a plurality of reagent wells. Each reagent well includes a piston element for delivery of reagent to a test surface.

In US2011059834 A1, a centrifuge comprises fluidically communicating containers forming a closed system for the sterile processing of blood samples, and the containers are each formed in the shape of a tubule having a piston moveably arranged in the interior of the tubule, wherein the tubules are in operational connection with the motor/gear unit associated with the respective container receptacle, by a push rod being in removable contact with the piston.

The present invention aims to remedy all or part of the disadvantages mentioned above. In particular, the present invention aims at providing a fluid control and processing system that is simple, reliable, accurate and avoids contamination of the instrument.

The present invention fulfills these objectives by providing a fluid control and processing system, as set out in independent claim 1, comprising:
- a cartridge;
- an instrument being designed for operating the cartridge;
- at least a cylinder body being received in the cartridge, said at least a cylinder body comprising a cylinder and at least a fluid port in fluid communication with said cylinder;
- a piston being movable in translation along an axis A in the cylinder to modulate a fluid volume inside said cylinder;
the instrument comprising a piston driver, said piston driver being designed for driving the piston in rotation and in translation around and along the axis A;
the fluid control and processing system further comprising:
- dispensing ports to drive at least a fluid flow, each dispensing port being positioned to be connectable, when the instrument is operating the cartridge, with the at least a fluid port of the cylinder port by rotation of the cylinder body;
- reversible fastening means for fastening the piston to the piston driver when the piston driver is rotated with respect to the piston in a first direction around the axis A which extends along the piston driver; and said reversible fastening means being designed for unfastening the piston from the piston driver when the piston driver is rotated with respect to the piston in a second direction opposite to the first direction, so that the movement of the piston is controlled by the piston driver;
- rotating means comprising a cylinder driver constitutive of the instrument for rotating the cylinder body around the axis A, and thereby the fluid port, in order to place the fluid port in fluid communication with at least one of the dispensing ports;
- interlocking means for interlocking the piston driver and the cylinder driver, so that the rotation of the cylinder body is controllable by the piston driver, when the piston driver and the piston are fastened by the fastening means.

Thus, the fluid control and processing system according to the present invention solves the technical issues mentioned above by providing reversible fastening means for fastening the piston to the piston driver. Indeed, the piston and the piston driver can be bound together, when the instrument is operating the cartridge, so that the piston driver from the instrument can control the movement of the piston received in the cylinder body of the cartridge. When the piston driver is fastened to the piston via the reversible fastening means, the piston is movable around an axis A extending along the piston driver. Thus, in the system according to the present invention the piston driver can control the movement of the piston both in rotation and in translation around a single axis A. If the cartridge comprises a plurality of cylinder bodies, each cylinder body comprising a cylinder and a piston movable in said cylinder, each piston is movable around the axis extending along the piston driver fastened to the piston received in each cylinder. Thus, the instrument operating the cartridge is capable of modulating individually the fluid volume inside each cylinder by moving the piston around the axis extending along the piston driver fastened to said piston received in each cylinder. Moreover, the rotating means for rotating the cylinder body in respect with the cartridge allow the control of the position of the fluid port with respect to the dispensing ports. The fluid control and processing system according to the present invention further offers flexibility since several cartridges can be operated successively by a given instrument as the fastening means are reversible and therefore allow the piston of the cartridge and the piston driver of the instrument to be unfastened.

According to an embodiment of the present invention, the fastening means comprise at least two parts, a first part and a second part, the piston being attached to said first part and the piston driver comprising said second part.

In an embodiment of the present invention, the rotating means comprise at least a cylinder driver constitutive of the instrument, the cylinder driver being designed for forming a revolute joint with the cylinder body.

According to the invention, the fastening means are designed for fastening the piston with the piston driver when the piston driver is rotated with respect to the piston in a first direction; and are designed for unfastening the piston from the piston driver when the piston driver is rotated with respect to the piston in a second direction opposite to the first direction. Thus, when cartridge is operated by the instrument, a rotation in the first direction of the piston driver with respect to the piston permits the fastening of the cartridge with the instrument via the fastening means; a subsequent translation of the piston driver permits the control of the piston. The rotation in the opposite direction of the piston driver with respect to the piston permits to uncouple the cartridge and the instrument. Such fastening means hence offer flexibility. Such fastening means do not require complex mechanisms.

In an embodiment of the present invention, the fastening means comprise a bayonet mount. Such a bayonet mount is simple and requires a limited number of technical parts. With such a bayonet mount, the coupling and uncoupling are swift and require rotating the piston driver by a low angle.

According to the invention, the fluid control and processing system further comprises interlocking means for interlocking the piston driver and the rotating means, so that the rotation of the cylinder body is controllable by the piston driver, when the piston driver and the piston are fastened by the fastening means. It is critical for the connection between the cartridge and the instrument according to the invention to remain fastened during the whole operation of the cartridge. The interlocking means are engaged once the piston driver and the piston are fastened together.

In an embodiment of the present invention, the interlocking means are designed for preventing the rotation of the piston driver with respect to the piston in the second direction. Such interlocking means, once engaged, prevent the disconnection of the fastening means. Rotation of the interlocking means permits to rotate the rotating means and the piston driver at the same time.

If the fastening means are designed for unfastening the piston from the piston driver when the piston driver is rotated with respect to the piston in the second direction, the interlocking means thus prevent the disconnection of the fastening means. Indeed the rotation of the piston driver with respect to the piston in the second direction is not allowed when interlocking means are engaged.

In an embodiment, the invention further comprises a prismatic connection between the interlocking means and the piston driver and a clamping joint, between the rotating means and the interlocking means. Such connection permits the translation of the piston driver inside the interlocking means.

In another embodiment, when the fastening means fasten the piston with the piston driver, a translation of the piston driver in a direction along the axis A causes a translation of the piston in the same direction.

In one embodiment, the interlocking means comprises a guide bush so that once the piston driver is fastened to the piston and when the cylinder driver is coupled with the cylinder body, a rotation of the guide bush causes the simultaneous rotation of the piston driver and of the cylinder driver.

The present invention is further illustrated by the following detailed description set forth in view of the appended drawings, which represent an exemplary and explanatory embodiment of a fluid control and processing system not restrictive of the invention, wherein:
Figure 1 illustrates a perspective view of a cartridge according to the present invention;
Figure 2 is an exploded view of a piston driver from an instrument according to the present invention;
Figure 3 is a partial cross section view of the piston received in a cylinder body;
Figure 4a is a partial cross section view of the system showing a piston driver unfastened to a piston;
Figure 4b is a partial cross section view of the system showing the piston driver fastened to the piston;
Figure 5a is a partial cross section view of the system showing the interlocking means interlocked with the cylinder body;
Figure 5b is a partial cross section view of the system showing the interlocking means not interlocked with the cylinder body;
Figure 6a is a partial cross section view of the system, when the interlocking means are interlocked with the cylinder body and the piston driver is translated along a longitudinal axis;
Figure 6b is a partial cross section view of the system when the interlocking means are interlocked with the cylinder body
Figure 7 is a partial cross section of the piston driver and the interlocking means.

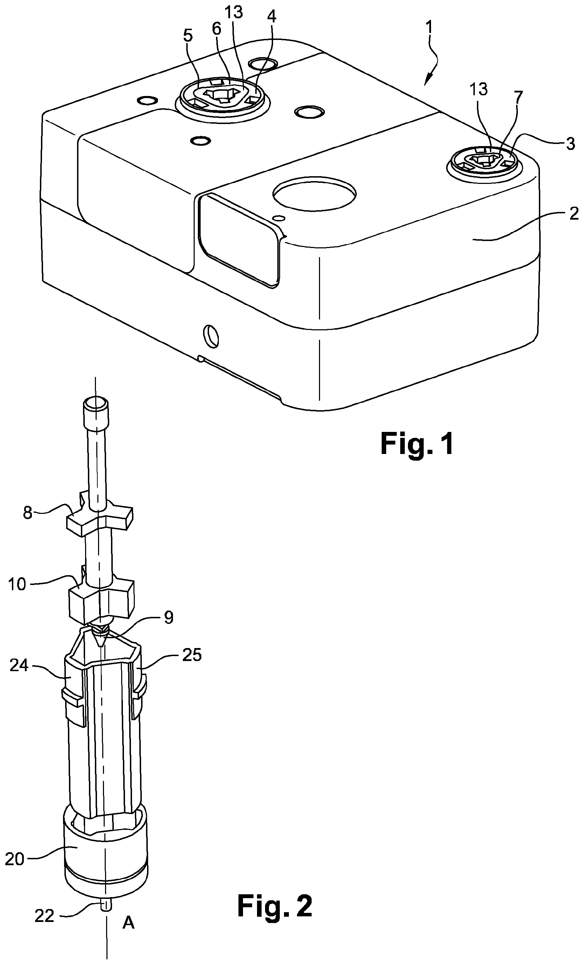

A fluid control and processing system 1, partially illustrated in figures 1 to 7, according to the present invention comprises a cartridge 2 shown in figure 1. The cartridge 2 is designed for being operated by an instrument not shown in figures. The cartridge 2 comprises two cylinder bodies (not represented in figures) being received in the cartridge 2. Each cylinder body presents a cylinder interface 3, 4 attached to one of the extremities of the cylinder body, so that said cylinder interface 3, 4 is accessible from the outside of the cartridge 2. Each cylinder interface 3, 4 has a shape of a hollow right circular cylinder 5 (figures 1, 3, 4, 5 and 6) presenting a circular bearing surface 6, 7 forming the external surface of said cylinder interface 3,4. Each cylinder body comprises a cylinder, not shown in figures, and at least a fluid port, not shown in the figures, in fluid communication with said cylinder.

The fluid control and processing system 1 further comprises dispensing ports, not depicted in figures, to drive at least a fluid flow. Each dispensing port is positioned in order to be connectable with the fluid port, when the instrument is operating the cartridge 2.

The system further comprises an instrument (not shown in the figures) equipped with a piston driver 8, shown in figure 2, designed for operating the cartridge 2. The piston driver 8 depicted in figure 2 has a shape of a shaft extending along an axis A, shown in fig. 2, and presents at one of its tips 9 three pins 10, each extending in a direction perpendicular to the axis A. Each pin 10 is evenly spaced from the other pins 10 around said axis.

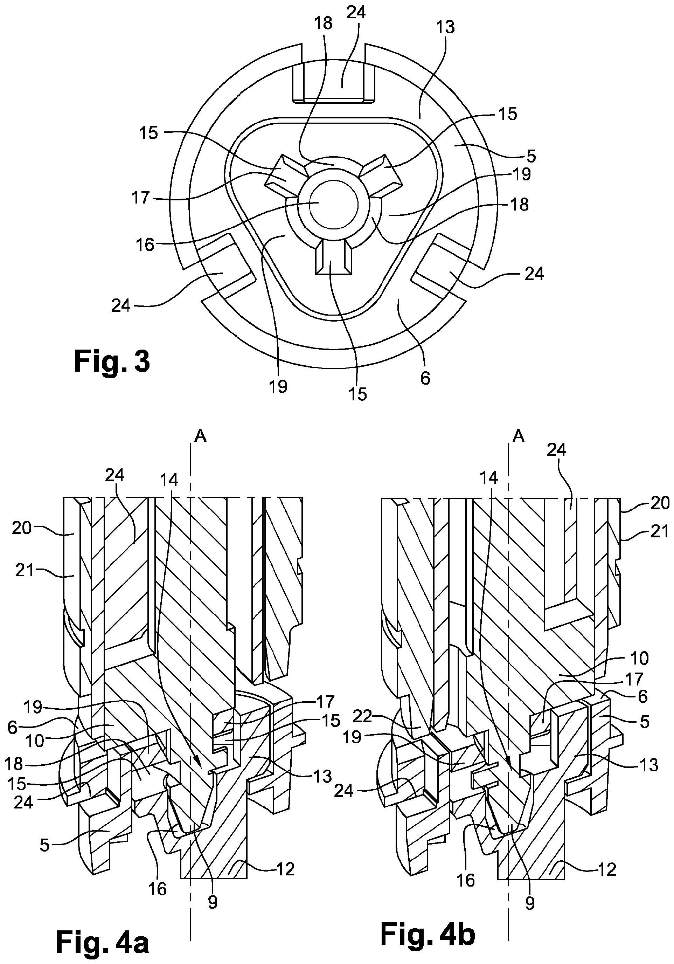

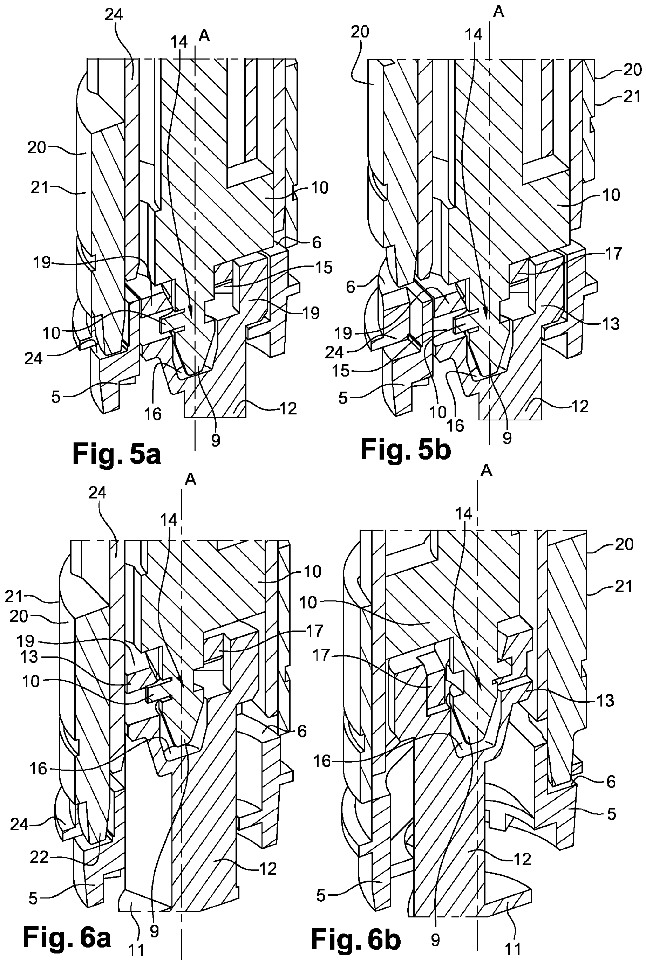

The piston driver 8 is designed for driving a piston 11, partially shown in figure 6a and 6b. Said piston 11 is movable in the cylinder to modulate a fluid volume inside said cylinder to draw or expel a fluid via the fluid port. The piston driver 8 can be connected to the piston 11 either directly (in an embodiment not shown) or via a piston rod 12 prolonging the piston 11, partially shown in figures 4a, 4b, 5a, 5b, 6a and 6b. In the present case, the instrument (not shown in the figures) comprises two piston drivers 8 capable of operating the two pistons 11 of the cartridge 2. Each piston driver 8 is designed for being fastened to one piston 11 in order to move individually each piston 8 around an axis extending along the piston driver 8 fastened to each piston 11. Thus, one piston 11 is movable around an axis A (shown in figure 2, 4a, 4b) and the other piston is movable around an axis B (not shown in the figures).

The fluid control and processing system 1 includes reversible fastening means for fastening the piston 11 to the piston driver 8 in a reversible manner. Said fastening means comprise at least two parts, a first part 13 located at the tip 9 of the piston rod 12 and a second part 14, complementary to the first part 13, that comprises the tip 9 and the pins 10 of the piston driver 8, as shown in figure 4a and 4b.

Said fastening means form a bayonet mount as the first part 13 comprises a recess 16, adapted to receive the tip 9 of the piston driver 8, and three L-shaped grooves 15 each adapted to receive one of the pins 10. Each L-shaped groove 15 comprises a first groove 17 extending along the axis A and a second groove 18 extending in a plane that is perpendicular to said axis A, see figures 3, 4a, 4b, 5a, 5b, 6a, 6b. Each second groove 18 is delineated by a rim 19 preventing a translation along the axis A of a pin 10 engaged in said second groove 18. To fasten the fastening means, the tip 9 of the piston driver 8 is inserted into the recess 16, so that each pin 10 engages in one of the first grooves 17. A rotation around the axis A in a first direction (anticlockwise in the embodiment described in the figures) of the piston driver 8 with respect to the piston 11, once the tip 9 and the pins 10 are correctly inserted in the first part 13, permits to fasten the piston driver 8 to the piston 11 as the pins 10 engage in the second grooves 18 and are blocked in translation along axis A by the rims 19. When pins 10 are in the second grooves 18, as shown in figure 6a, a translation of the piston driver 9 in a direction along the axis A causes a translation of the piston 11 in the same direction.

A rotation of the piston driver 8 with respect to the piston 11 in a second direction, opposite to the first direction, permits to unfasten the piston 11 and the piston driver 8.

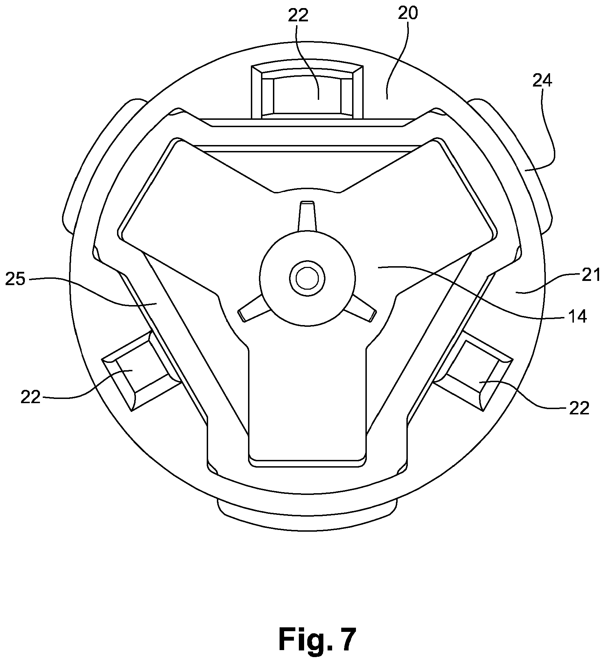

The fluid control and processing system 1 also comprises rotating means for rotating the cylinder body, and thereby the fluid port, in order to place the fluid port in fluid communication with at least one of the dispensing ports. Said rotating means comprise a cylinder driver 20, shown in figures 4a, 4b, 5a, 5b, 6a, 6b and 7. Said cylinder driver 20 comprises a hollow circular cylindrical body 21 defining an internal space 24 whose shape is adapted to allow the piston driver 8 to translate and rotate inside. The internal space 24 presents a cylindrical shape, whose base forms substantially a triangle. The cylinder driver 20 comprises three engaging teeth 22, figure 7, located and designed for being inserted in complementary coupling grooves 23 located in the bearing surface 6, as shown in figures 5a and 5b. When the engaging teeth 22 are inserted into said coupling grooves 23, a rotation of said cylinder driver 20 around the axis A causes a rotation of the cylinder interface 3 and of the cylinder body, see figures 6a and 6b.

The fluid control and processing system 1 further comprises interlocking means for interlocking the piston driver 8 and the cylinder driver 20, so that the rotation of the cylinder body is controllable by the piston driver 8, when the piston driver 8 is fastened to the piston 11 by the fastening means. Such interlocking means comprises a guide bush 24 (figures 2 to 7). The guide bush 24 presents a hollow extruded wall 25 whose internal section is adapted for receiving the piston driver 8 with the pins 10 as shown in figure 7. The external section of the extruded wall 25 is adapted to form a sliding joint with the internal space 24 of the cylinder driver 20. Once the piston driver 8 is fastened to the piston 11 and when the cylinder driver 20 is coupled with the cylinder body via the cylinder interface 3, the guide bush 24 is translated along the axis A to accommodate the cylinder driver 8 and to form a joint with the cylinder driver 20 as shown in figure 7. In that position, a rotation of the guide bush 24 causes the simultaneous rotation of the piston driver 8 and of the cylinder driver 20.

## Claims

1. A fluid control and processing system (1) comprising:
- a cartridge (2);
- an instrument being designed for operating the cartridge (2);
- at least a cylinder body being received in the cartridge (2), said at least a cylinder body comprising a cylinder and at least a fluid port in fluid communication with said cylinder;
- a piston (11) being movable in translation along an axis A in the cylinder to modulate a fluid volume inside said cylinder;
the instrument comprising a piston driver (8), said piston driver (8) being designed for driving the piston (11) in rotation and in translation around and along the axis A;
the fluid control and processing system (1) further comprising:
- dispensing ports to drive at least a fluid flow, each dispensing port being positioned to be connectable, when the instrument is operating the cartridge (2), with the at least a fluid port of the cylinder port by rotation of the cylinder body;
- reversible fastening means for fastening the piston (11) to the piston driver (8) when the piston driver (8) is rotated with respect to the piston (11) in a first direction around the axis A which extends along the piston driver (8); and said reversible fastening means being designed for unfastening the piston (11) from the piston driver (8) when the piston driver (8) is rotated with respect to the piston (11) in a second direction opposite to the first direction, so that the movement of the piston (11) is controlled by the piston driver (8);
- rotating means comprising a cylinder driver (20) constitutive of the instrument for rotating the cylinder body around the axis A, and thereby the fluid port, in order to place the fluid port in fluid communication with at least one of the dispensing ports;
- interlocking means (24, 25) for interlocking the piston driver (8) and the cylinder driver (20), so that the rotation of the cylinder body is controllable by the piston driver (8), when the piston driver (8) and the piston (11) are fastened by the fastening means.

2. A fluid control and processing system (1) according to claim 1, wherein the fastening means comprise at least two parts, a first part (13) and a second part (14), the piston (11) being attached to said first part (13) and the piston driver (14) comprising said second part (14).

3. A fluid control and processing system (1) according to claims 1 or 2 wherein when the fastening means fasten the piston (11) with the piston driver (8), a translation of the piston driver (8) in a direction along the axis A causes a translation of the piston (11) in the same direction.

4. A fluid and control and processing system (1) according to any one of claims 1 to 3, wherein the cylinder driver (20) is designed for forming a revolute joint with the cylinder body.

5. A fluid control and processing system according to any one of claims 1 to 4, wherein the fastening means are designed for fastening the piston (11) with the piston driver (8) when the piston driver (8) is rotated with respect to the piston (11) in a first direction, and are designed for unfastening the piston (11) from the piston driver (8) when the piston driver (8) is rotated with respect to the piston (11) in a second direction opposite to the first direction.

6. A fluid control and processing system (1) according to any one of the claims 1 to 5, wherein the fastening means comprise a bayonet mount.

7. A fluid control and processing system (1) according to any one of the claims 1 to 6, wherein the interlocking means are designed for preventing the rotation of piston driver (8) with respect to the piston in the second direction.

8. A fluid control and processing system according to any one of the claims 1 to 7, wherein it further comprises a prismatic connection between the interlocking means and the piston driver (8) and a clamping joint, between the rotating means and the interlocking means.

9. A fluid control and processing system according to any one of claims 1 to 8, wherein the interlocking means further comprises a guide bush (24) so that once the piston driver (8) is fastened to the piston (11) and when the cylinder driver (29) is coupled with the cylinder body, a rotation of the guide bush (24) causes the simultaneous rotation of the piston driver (8) and of the cylinder driver (20).

## Patentansprüche

1. Ein Fluidsteuerungs- und -verarbeitungssystem (1), umfassend
- eine Kartusche (2);
- ein Instrument, welches zum Betätigen der Kartusche (2) ausgestaltet ist;
- mindestens einen Zylinderkörper, der in der Kartusche (2) aufgenommen wird, wobei der mindestens eine Zylinderkörper einen Zylinder und mindestens einen Fluidanschluss in Fluidverbindung mit dem Zylinder umfasst;
- einen Kolben (11), der entlang einer Achse A in dem Zylinder translatorisch beweglich ist, um ein Fluidvolumen im Inneren des Zylinders zu verändern;
wobei das Instrument einen Kolbenantrieb (8) umfasst, wobei der Kolbenantrieb (8) so ausgestaltet ist, dass er den Kolben (11) in Rotation und in Translation um und entlang der Achse A antreibt;
wobei das Fluidsteuerungs- und -verarbeitungssystem (1) weiterhin umfasst:
- Ausgabeanschlüsse, um mindestens einen Fluidstrom anzutreiben, wobei jeder Ausgabeanschluss so angeordnet ist, dass er, wenn das Instrument die Kartusche (2) betätigt, mit dem mindestens einen Fluidanschluss des Zylinderanschlusses durch Drehung des Zylinderkörpers verbindbar ist;
- reversible Befestigungsmittel zum Befestigen des Kolbens (11) an dem Kolbenantrieb (8), wenn der Kolbenantrieb (8) in Bezug auf den Kolben (11) in einer ersten Richtung um die Achse A gedreht wird, die sich entlang des Kolbenantriebs (8) erstreckt; und wobei die reversiblen Befestigungsmittel zum Lösen des Kolbens (11) von dem Kolbenantrieb (8) ausgestaltet sind, wenn der Kolbenantrieb (8) in Bezug auf den Kolben (11) in einer zweiten Richtung entgegengesetzt zu der ersten Richtung gedreht wird, so dass die Bewegung des Kolbens (11) durch den Kolbenantrieb (8) gesteuert wird;
- Rotationsmittel umfassend einen Zylinderantrieb (20), der Bestandteil des Instruments ist, zum Drehen des Zylinderkörpers um die Achse A und damit des Fluidanschlusses, um den Fluidanschluss in Fluidverbindung mit mindestens einem der Ausgabeanschlüsse zu bringen;
- Verriegelungsmittel (24, 25) zum Verriegeln des Kolbenantriebs (8) und des Zylinderantriebs (20), so dass die Drehung des Zylinderkörpers durch den Kolbenantrieb (8) steuerbar ist, wenn der Kolbenantrieb (8) und der Kolben (11) durch die Befestigungsmittel befestigt sind.

2. Ein Fluidsteuerungs- und -verarbeitungssystem (1) nach Anspruch 1, wobei die Befestigungsmittel mindestens zwei Teile umfassen, einen ersten Teil (13) und einen zweiten Teil (14), wobei der Kolben (11) an dem ersten Teil (13) befestigt ist und der Kolbenantrieb (14) den zweiten Teil (14) umfasst.

3. Ein Fluidsteuerungs- und -verarbeitungssystem (1) nach Anspruch 1 oder 2, wobei, wenn die Befestigungsmittel den Kolben (11) an dem Kolbenantrieb (8) befestigen, eine Verschiebung des Kolbenantriebs (8) in einer Richtung entlang der Achse A eine Verschiebung des Kolbens (11) in der gleichen Richtung bewirkt.

4. Ein Fluidsteuerungs- und -verarbeitungssystem (1) nach einem der Ansprüche 1 bis 3, wobei der Zylinderantrieb (20) zur Bildung einer Drehverbindung mit dem Zylinderkörper ausgestaltet ist.

5. Ein Fluidsteuerungs- und -verarbeitungssystem nach einem der Ansprüche 1 bis 4, wobei die Befestigungsmittel zum Befestigen des Kolbens (11) an dem Kolbenantrieb (8) ausgestaltet sind, wenn der Kolbenantrieb (8) in Bezug auf den Kolben (11) in einer ersten Richtung gedreht wird, und wobei sie zum Lösen des Kolbens (11) vom Kolbenantrieb (8) ausgestaltet sind, wenn der Kolbenantrieb (8) in Bezug auf den Kolben (11) in einer zweiten Richtung entgegengesetzt zur ersten Richtung gedreht wird.

6. Ein Fluidsteuerungs- und -verarbeitungssystem (1) nach einem der Ansprüche 1 bis 5, wobei die Befestigungsmittel eine Bajonettbefestigung umfassen.

7. Ein Fluidsteuerungs- und -verarbeitungssystem (1) nach einem der Ansprüche 1 bis 6, wobei die Verriegelungsmittel so ausgestaltet sind, dass sie die Drehung des Kolbenantriebs (8) in Bezug auf den Kolben in der zweiten Richtung verhindern.

8. Ein Fluidsteuerungs- und -verarbeitungssystem nach einem der Ansprüche 1 bis 7, wobei es weiterhin eine prismatische Verbindung zwischen den Verriegelungsmitteln und dem Kolbenantrieb (8) und eine Klemmverbindung zwischen den Rotationsmitteln und den Verriegelungsmitteln aufweist.

9. Ein Fluidsteuerungs- und -verarbeitungssystem nach einem der Ansprüche 1 bis 8, wobei die Verriegelungsmittel weiterhin eine Führungsbuchse (24) aufweisen, so dass, sobald der Kolbenantrieb (8) am Kolben (11) befestigt ist und wenn der Zylinderantrieb (29) mit dem Zylinderkörper gekoppelt ist, eine Drehung der Führungsbuchse (24) die gleichzeitige Drehung des Kolbenantriebs (8) und des Zylinderantriebs (20) bewirkt.

## Revendications

1. Un système de commande et de traitement des fluides (1) comprenant :
- une cartouche (2) ;
- un instrument conçu pour faire fonctionner la cartouche (2) ;
- au moins un corps de cylindre étant reçu dans la cartouche (2), ledit au moins un corps de cylindre comprenant un cylindre et au moins un orifice de fluide en communication de fluide avec ledit cylindre ;
- un piston (11) étant mobile en translation le long d'un axe A dans le cylindre pour moduler un volume de fluide à l'intérieur dudit cylindre ;
l'instrument comprenant un entraîneur de piston (8), ledit entraîneur de piston (8) étant conçu pour entraîner le piston (11) en rotation et en translation autour et le long de l'axe A ;
le système de contrôle et de traitement du fluide (1) comprenant en outre :
- des orifices de distribution pour entraîner au moins un écoulement de fluide, chaque orifice de distribution étant positionné de manière à pouvoir être connecté, lorsque l'instrument fait fonctionner la cartouche (2), à l'au moins un orifice de fluide de l'orifice de cylindre, par rotation du corps de cylindre ;
- des moyens de fixation réversibles pour fixer le piston (11) à l'entraîneur de piston (8) lorsque l'entraîneur de piston (8) est tourné par rapport au piston (11) dans une première direction autour de l'axe A qui s'étend le long de l'entraîneur de piston (8) ; et
lesdits moyens de fixation réversibles étant conçus pour détacher le piston (11) de l'entraîneur de piston (8) lorsque l'entraîneur de piston (8) est tourné par rapport au piston (11) dans une deuxième direction opposée à la première direction, de sorte que le mouvement du piston (11) est commandé par l'entraîneur de piston (8) ;
- des moyens de rotation comprenant un entraîneur de cylindre (20) constitutif de l'instrument pour faire tourner le corps de cylindre autour de l'axe A, et donc l'orifice de fluide, afin de placer l'orifice de fluide en communication de fluide avec au moins un des orifices de distribution ;
- des moyens de verrouillage (24, 25) pour verrouiller l'entraîneur de piston (8) et l'entraîneur de cylindre (20) de sorte que la rotation du corps de cylindre puisse être contrôlée par l'entraîneur de piston (8), lorsque l'entraîneur de piston (8) et le piston (11) sont fixés par les moyens de fixation.

2. Un système de commande et de traitement de fluide (1) selon la revendication 1, dans lequel les moyens de fixation comprennent au moins deux parties, une première partie (13) et une seconde partie (14), le piston (11) étant fixé à ladite première partie (13) et l'entraîneur de piston (14) comprenant ladite seconde partie (14).

3. Un système de commande et de traitement de fluide (1) selon les revendications 1 ou 2, dans lequel lorsque les moyens de fixation fixent le piston (11) avec l'entraîneur de piston (8), une translation de l'entraîneur de piston (8) dans une direction le long de l'axe A provoque une translation du piston (11) dans la même direction.

4. Un système de fluide et de commande et de traitement (1) selon l'une quelconque des revendications 1 à 3, dans lequel l'entraîneur de cylindre (20) est conçu pour former un joint tournant avec le corps du cylindre.

5. Un système de commande et de traitement de fluide selon l'une quelconque des revendications 1 à 4, dans lequel les moyens de fixation sont conçus pour fixer le piston (11) avec l'entraîneur de piston (8) lorsque l'entraîneur de piston (8) est tourné par rapport au piston (11) dans une première direction, et sont conçus pour détacher le piston (11) de l'entraîneur de piston (8) lorsque l'entraîneur de piston (8) est tourné par rapport au piston (11) dans une seconde direction opposée à la première direction.

6. Un système de commande et de traitement de fluide (1) selon l'une quelconque des revendications 1 à 5, dans lequel les moyens de fixation comprennent un montage à baïonnette.

7. Un système de commande et de traitement de fluide (1) selon l'une quelconque des revendications 1 à 6, dans lequel les moyens de verrouillage sont conçus pour empêcher la rotation de l'entraîneur de piston (8) par rapport au piston dans la seconde direction.

8. Un système de commande et de traitement de fluide selon l'une quelconque des revendications 1 à 7, comprenant en outre une connexion prismatique entre les moyens de verrouillage et l'entraîneur de piston (8) et un joint de serrage, entre les moyens de rotation et les moyens de verrouillage.

9. Un système de commande et de traitement de fluide selon l'une quelconque des revendications 1 à 8, dans lequel le moyen de verrouillage comprend en outre une douille de guidage (24) de sorte qu'une fois que l'entraîneur de piston (8) est fixé au piston (11) et lorsque l'entraîneur de cylindre (29) est couplé au corps du cylindre, une rotation de la douille de guidage (24) provoque la rotation simultanée de l'entraîneur de piston (8) et de l'entraîneur de cylindre (20).
